# EUROPEAN PATENT SPECIFICATION

(11) **EP 2 675 603 B1**
(45) Date of publication and mention of the grant of the patent: **26.10.2016**
(21) Application number: 12747505.1
(22) Date of filing: 16.02.2012
(51) Int. Cl.: B29C 45/28

(54) **MOLD-TOOL SYSTEM INCLUDING RUNNER ASSEMBLY CONFIGURED TO PROVIDE ACCESS PORTAL FOR PERMITTING ACCESS TO ASSEMBLY**
FORMWERKZEUGSYSTEM MIT EINER VERTEILERKANALANORDNUNG ZUR BEREITSTELLUNG EINES ZUGANGSPORTALS ZUR GEWÄHRUNG DES ZUGANGS ZU EINER BAUGRUPPE
SYSTÈME D'OUTIL DE MOULAGE COMPRENANT UN ENSEMBLE CANAL DE COULÉE CONFIGURÉ POUR OFFRIR UN PORTAIL D'ACCÈS AFIN DE PERMETTRE UN ACCÈS À UN ENSEMBLE

(30) Priority: 17.02.2011 US 201161443735 P
(43) Date of publication of application: 25.12.2013
(73) Proprietor: HUSKY INJECTION MOLDING SYSTEMS LTD., Bolton ON L7E 5S5 (CA)
(72) Inventor: METZ, Philipe Alexandre, 57100 Thionville (FR); DEZON-GAILLARD, Patrice Fabien, Jericho, Vermont 05465 (US); OVERFIELD, Sarah Kathleen, Colchester, Vermont 05446 (US)
(74) Representative: Vossius, Corinna
(86) International application number: PCT/US2012/025330
(87) International publication number: WO 2012/112732

(56) References cited:
- US-A- 713 183
- US-A- 3 540 329
- US-A- 5 141 696
- US-A- 5 183 069
- US-A1- 2004 076 710
- US-A1- 2010 092 588
- US-A1- 2010 207 289
- US-A1- 2011 018 172
- US-B2- 7 347 684

## Description

### TECHNICAL FIELD

An aspect relates to a mold-tool system.

United States Patent Application No. 2010/0092588 to Tabassi, published on April 15, 2010, discloses an injection molding apparatus having magnetic valve pin coupling and related method. An actuated part, such as a valve pin plate or actuator piston, is movable in forward and rearward directions. A coupling part is located rearward of the actuated part and held in position by magnetic attraction between the coupling part and the actuated part. A valve pin is coupled to the coupling part. The valve pin extends in the forward direction for opening and closing a mold gate. When a stopping force applied to the valve pin is greater than a force of the magnetic attraction between the coupling part and the actuated part, the actuated part moves away from the coupling part in the forward direction, thereby reducing the stopping force on the valve pin.

United States Patent Application No. 2010/0207289 to Feick et al., published on August 19, 2010, discloses an injection molding apparatus having magnetic valve pin coupling. The magnetic coupling for an injection molding apparatus, such as a hot half or hot runner, includes a first magnetic part for connection to an actuator, a valve pin plate, or the like and a movable second magnetic part for connection to a valve pin. The first magnetic part and the second magnetic part are coupled by a magnetic force. The first magnetic part can be part of the actuator. The second magnetic part can be part of the valve pin. A valve pin plate can be provided for a plurality of valve pins.

United States Patent Application No. 2011/0018172 to Bouti et al., published on January 27, 2011, discloses a safety connector (100; 200; 300) for a hot runner (600) having a valve stem (104) and an actuation assembly (102), the safety connector (100) including: a shear member (106) releasably interlocking the valve stem (104) with the actuation assembly (102), once the shear member (106) has interlocked the valve stem (104) with the actuation assembly (102), the valve stem (104) becomes movable in response to movement of the actuation assembly (102), and the shear member (106) being configured to shear destructively, and responsive to a predetermined undesired force acting on the shear member (106), the shear member (106) shears and the valve stem (104) becomes released from the actuation assembly (102).

### SUMMARY

The inventors have researched a problem associated with known molding systems that inadvertently manufacture bad-quality molded articles or parts. After much study, the inventors believe they have arrived at an understanding of the problem and its solution, which are stated below, and the inventors believe this understanding is not known to the public.

One problem occurs for the case where an end user of a molding system may need to fine-tune an aspect of an assembly (which may also be called a sub-assembly) of a runner assembly of the molding system. An example of a fine tuning of an assembly of the runner assembly may be (and is not limited to): an assembly configured to adjust valve stem protrusion during mold qualification. Processing temperature may not be always known ahead of time and this may have an impact regarding the amount of stem protrusion that may be required. Known actuated stem plates may use a stop-pad assembly that may be configured to provide an amount of protrusion of a valve stem into a mold assembly. Several thicknesses of the stop pad assembly may be used, in small increments. The height of the stop-pad assembly may be chosen or selected so as to achieve a predetermined nominal protrusion of the valve stem (that is, protrusion of the valve stem into a mold assembly while the valve stem may be placed in a closed position or no flow position). Also, the correct stop-pad assembly selection may compensate for manufacturing stack up deviation. Known runner assemblies may require a few adjustments using the stop- pad assembly, then the stop-pad assembly may be locked in position for production (that is, to permit molding of articles by the molding system). The known approach may be time consuming due to disassembly of the runner assembly, usually on a bench (that is, the runner assembly may be disconnected from the molding system) in order to swap out the stop-pad assembly.

In order to provide an arrangement to resolve the above, at least in part, a mold-tool system with the features as of claim 1 is provided.

Other aspects and features of the non-limiting embodiments will now become apparent to those skilled in the art upon review of the following detailed description of the non-limiting embodiments with the accompanying drawings.

### DETAILED DESCRIPTION OF DRAWINGS

The non-limiting embodiments will be more fully appreciated by reference to the following detailed description of the non-limiting embodiments when taken in conjunction with the accompanying drawings, in which:
FIGS. 1, 2A, 2B depict schematic representations of a molding system (**500**); and
FIGS. 3, 4A, 4B, 5A, 5B, 6, 7, 8, 9, 10, 11, 12, 13, 14 depict schematic representations of a mold-tool system (**100**) usable with the molding system (**500**) of FIGS. 1, 2A, 2B.

The drawings are not necessarily to scale and may be illustrated by phantom lines, diagrammatic representations and fragmentary views. In certain instances, details not necessary for an understanding of the embodiments (and/or details that render other details difficult to perceive) may have been omitted.

### DETAILED DESCRIPTION OF THE NON-LIMITING EMBODIMENT(S)

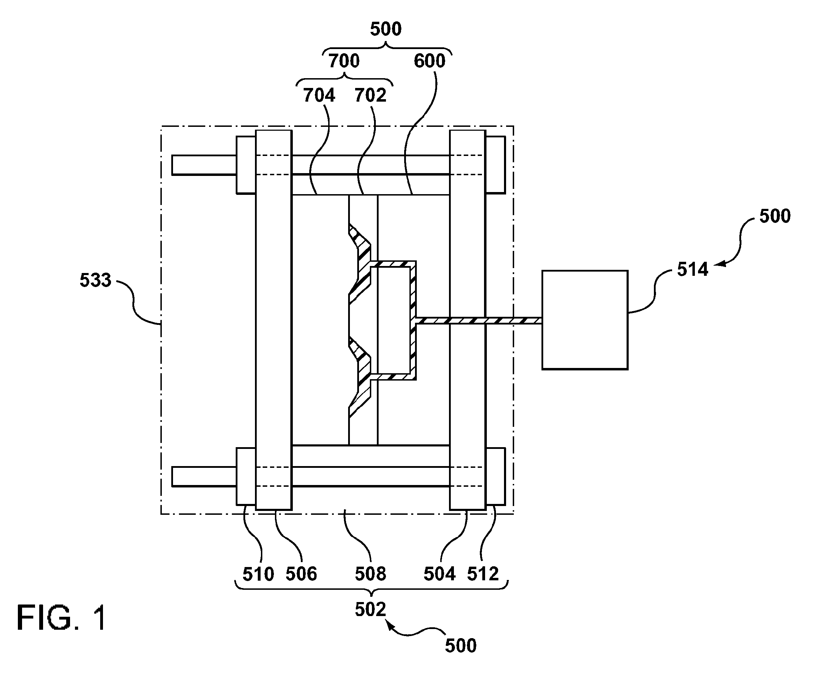

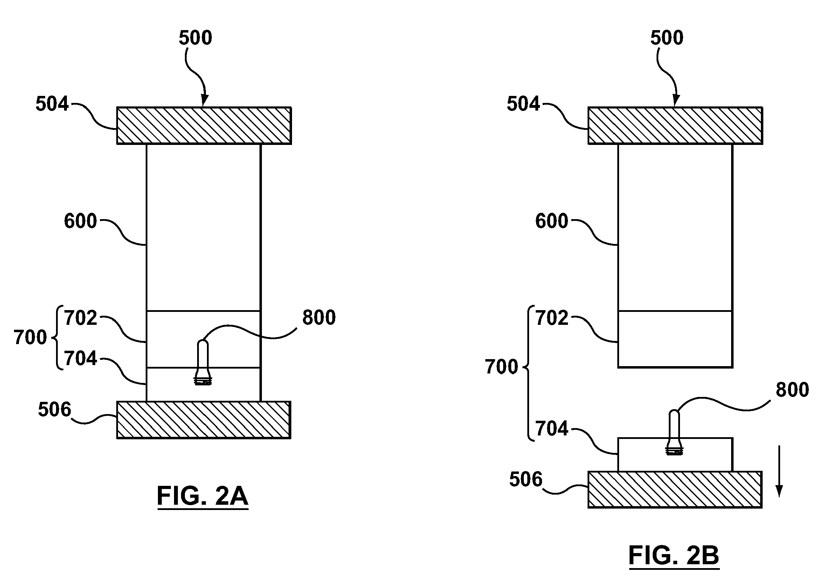

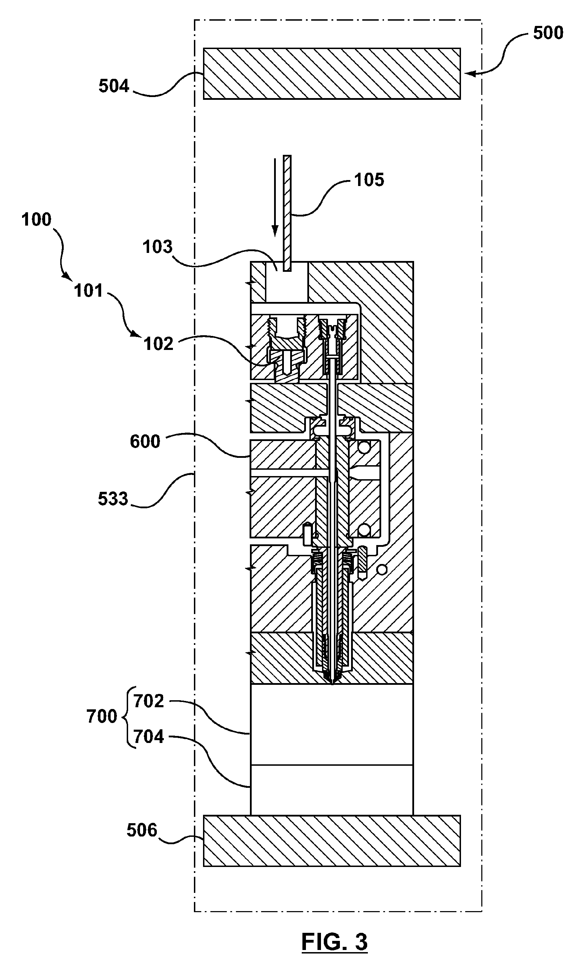

FIGS. 1, 2A, 2B depict the schematic representations of the molding system (**500**). FIGS. 3, 4A, 4B, 5A, 5B, 6, 7, 8, 9, 10, 11, 12, 13, 14 depict the schematic representations of the mold-tool system (**100**) usable with the molding system (**500**) of FIGS. 1, 2A, 2B. The molding system (**500**) and the mold-tool system (**100**), for example, may include components that are known to persons skilled in the art, and these known components will not be described here; these known components are described, at least in part, in the following reference books (for example): (i) *"*Injection Molding Handbook" authored by OSSWALD/TURNG/GRAMANN (ISBN: 3-446-21669-2), (ii) *"*Injection Molding Handbook" authored by ROSATO AND ROSATO (ISBN: 0-412-99381-3), (iii) *"*Injection Molding Systems" 3rd Edition authored by JOHANNABER (ISBN 3-446-17733-7) and/or (iv) *"*Runner and Gating Design Handbook" authored by BEAUMONT (ISBN 1-446-22672-9). It will be appreciated that for the purposes of this document, the phrase "includes (but is not limited to)" is equivalent to the word "comprising". The word "comprising" is a transitional phrase or word that links the preamble of a patent claim to the specific elements set forth in the claim, which define what the invention itself actually is. The transitional phrase acts as a limitation on the claim, indicating whether a similar device, method, or composition infringes the patent if the accused device (etc) contains more or fewer elements than the claim in the patent. The word "comprising" is to be treated as an open transition, which is the broadest form of transition, as it does not limit the preamble to whatever elements are identified in the claim.

The definition of the mold-tool system (**100**) is as follows: a system that may be positioned and/or may be used in a molding envelope (**533**) defined by a stationary platen (**504**) and a movable platen (**506**) of the molding system (**500**), such as an injection-molding system for example. For example, the mold-tool system (**100**) may be used with a mold assembly (**700**) and/or a runner assembly (**600**), and/or any sub-assembly or part thereof.

FIG. 1 depicts a schematic representation of the molding system (**500**). The molding system (**500**) may include (and is not limited to) a melt preparation assembly (**514**) configured to prepare, in use, a melt, also called a flowable molding material. A runner assembly (**600**) is configured to receive the melt form the melt preparation assembly (**514**). The runner assembly (**600**) is configured to convey the melt from the melt preparation assembly (**514**) to the mold assembly (**700**). The runner assembly (**600**) may abut the mold assembly (**700**). The molding system (**500**), the runner assembly (**600**) and the mold assembly (**700**) may be provided by a single vendor or may be provided by different vendors. A clamping assembly (**502**) includes a stationary platen (**504**) and a movable platen (**506**). The movable platen (**506**) that is configured to be movable relative to the stationary platen (**504**). The mold assembly (**700**) may include a first mold portion (**702**) that may interface with the runner assembly (**600**). The mold assembly (**700**) may also include a second mold portion (**704**) that may interface (or be supported by) with the movable platen (**506**). The runner assembly (**600**) may be configured to be connected to or to be supported by the stationary platen (**504**). The mold assembly (**700**) may be configured to be connected to or to be supported by the movable platen (**506**). Rods (**508**) extend between stationary platen (**504**) and the movable platen (**506**). The movable platen (**506**) may be movable along the rods (**508**). Lock assembly (**510**) is supported at ends of the rods (**508**), and the lock assembly (**510**) is configured to lock and unlock the movable platen (**506**) relative to the stationary platen (**504**). Clamp units (**512**) are attached to other ends of the rods (**508**).

FIGS. **2**A, **2**B depict schematic representation of the molding system (**500**) in a manufacturing mode of operation. FIG. **2**A depicts the case where in operation, the movable platen (**506**) may be moved toward stationary platen (**504**) so as to close the mold assembly (**700**). The clamp units (**512**) are configured to apply a clamping force to the stationary platen (**504**) and to the rods (**508**), which in turn is transferred to the lock assembly (**510**) and then to the movable platen (**506**). The clamping force is applied to the mold assembly (**700**) and the runner assembly (**600**) while the melt preparation assembly (**514**) delivers the melt (resin) to the runner assembly (**600**) and then to the mold assembly (**700**), under pressure. FIG. **2**B depicts the case where once the melt is solidified in the mold assembly (**700**), the movable platen (**506**) may be moved away from the stationary platen (**504**), so that the mold assembly (**700**) may be separated and thus allowing a molded article (**800**) to be removed from the mold assembly (**700**).

FIG. 3 depicts an example schematic representation of the mold-tool system (**100**). The mold-tool system (**100**) includes a runner assembly (**600**) being configured to provide an access portal (**103**). The access portal (**103**) is configured to permit access to an assembly (**101**). The access portal (**103**) is configured to permit access to the assembly (**101**) by a removal assembly (**105**), so that the assembly (**101**) may be removed from the runner assembly (**600**) and replaced. The assembly (**101**) is configured for support in the runner assembly (**600**). The access portal (**103**) is configured to permit access to the assembly (**101**) in situ, for the case where the runner assembly (**600**) is operatively mounted to the molding system (**500**), and several examples are described below for this case (specifically depicted in FIGS. **3**, **6**, **8**).

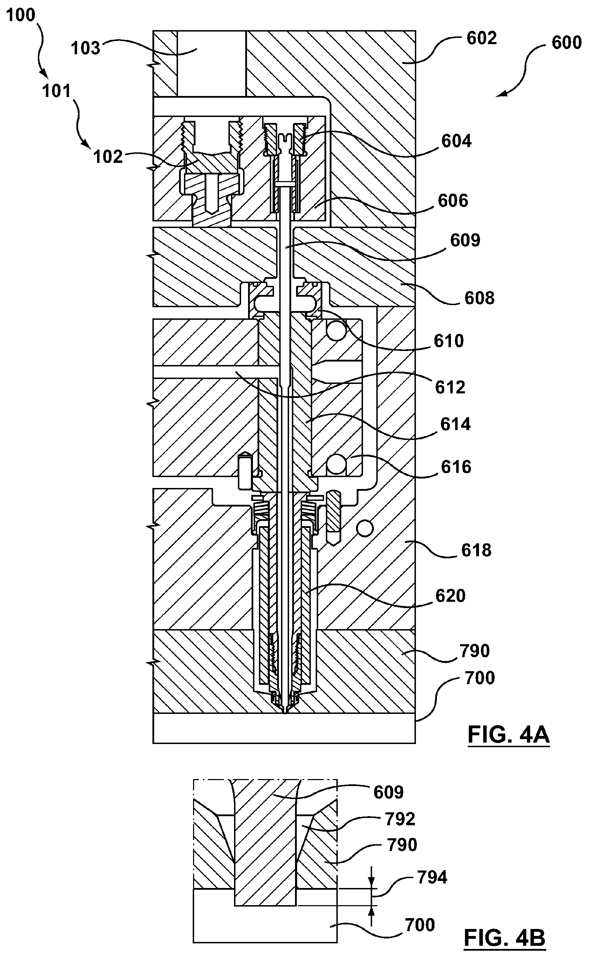

The assembly (**101**) includes a position-adjustment assembly (**102**). The position-adjustment assembly (**102**) is configured to interact with a stem-actuation plate (**606**), which is depicted in FIG. **4**A. The stem-actuation plate (**606**) is connected with a stem assembly (**609**) of a nozzle assembly (**620**), both of which are depicted in FIG. **4**A**.** The position-adjustment assembly (**102**) is configured to adjust an amount of protrusion of the stem assembly (**609**) relative to a mold assembly (**700**). The runner assembly (**600**) may support actuatable movement of the stem-actuation plate (**606**). The runner assembly (**600**) provides an access portal (**103**) that may be configured to permit accessible adjustment to the position-adjustment assembly (**102**).

It will be appreciated that for one case or situation (not depicted), the runner assembly (**600**) may be completely dismounted or disconnected from the stationary platen (**504**) and the mold assembly (**700**) (shown as being depicted in FIG. **1**); then, the runner assembly (**600**) may be placed on a repair bench, for example, and the access portal (**103**) of the runner assembly (**600**) may be used to gain access to the position-adjustment assembly (**102**).

It will be appreciated that for another case, which is currently depicted in FIG. **3**, the runner assembly (**600**) may remain within the molding envelope (**533**) defined by an outer perimeter of stationary platen (**504**) and the movable platen (**506**). For example, the runner assembly (**600**) may remain connected with the mold assembly (**700**), and the runner assembly (**600**) may be disconnected form the stationary platen (**504**); then, the movable platen (**506**) may be translated away from stationary platen (**504**) so that the access portal (**103**) of the runner assembly (**600**) may be used to gain access to the position-adjustment assembly (**102**). The access portal (**103**) is configured to accommodate insertion of a removal assembly (**105**) so as to permit replacement, at least in part, of the position-adjustment assembly (**102**), so that a different stem-protrusion height may be realized with another position-adjustment assembly.

FIGS. **3****,** **6****,** **8** provide several examples of the access portal (**103**) that is configured to permit accessible adjustment to the position-adjustment assembly (**102**) in situ. The meaning of "in situ" is that the runner assembly (**600**) remains positioned in the molding envelope (**533**) defined by the outer perimeter of stationary platen (**504**) and the movable platen (**506**) of the molding system (**500**), and/or that the runner assembly (**600**) may be attached in accordance to any one of the following cases: (i) directly to stationary platen (**504**), and indirectly to the movable platen (**506**) through the mold assembly (**700**).

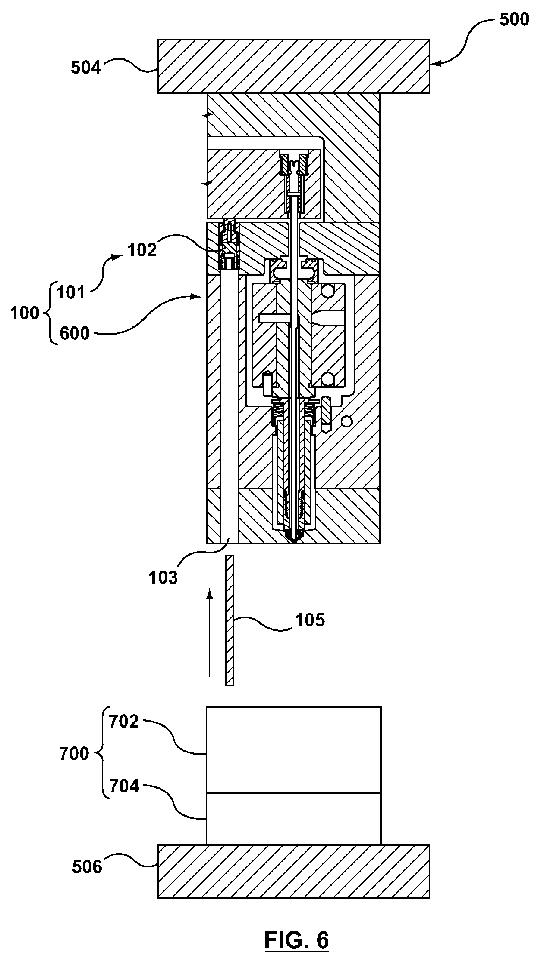

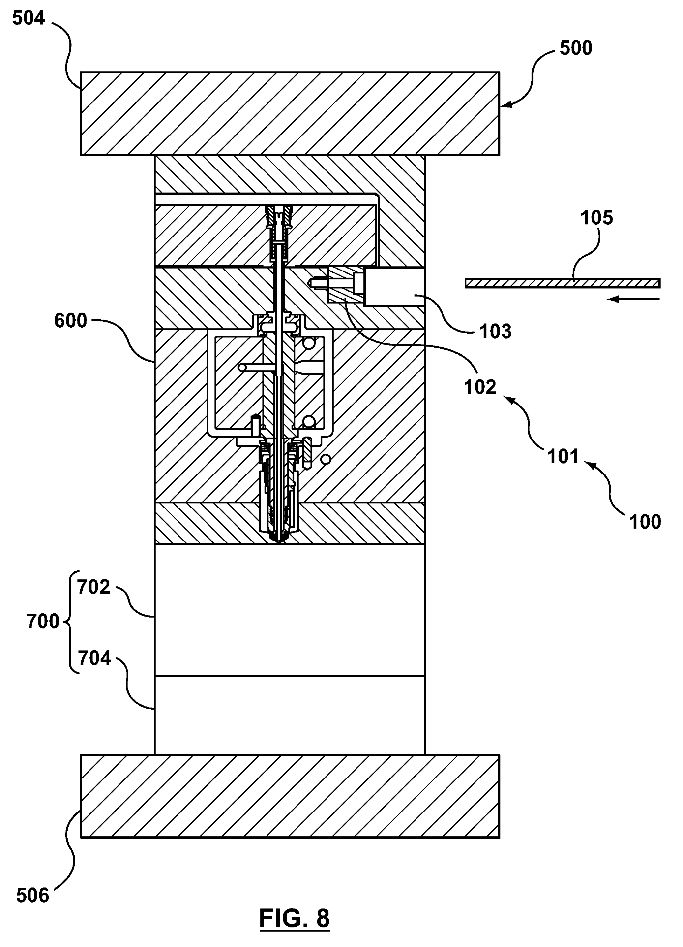

FIG. **3** provides an example of "in situ", wherein: (i) the runner assembly (**600**) remains positioned in the molding envelope (**533**) defined by stationary platen (**504**) and the movable platen (**506**), (ii) the runner assembly (**600**) remains coupled with the mold assembly (**700**), (iii) the mold assembly (**700**) and the runner assembly (**600**) are positioned in a retracted state that may be set apart from the stationary platen (**504**), and (iv) the mold assembly (**700**) and the runner assembly (**600**) remain supported by the movable platen (**506**). It will be appreciated that FIGS. **6** and **8** provide other examples of "in situ".

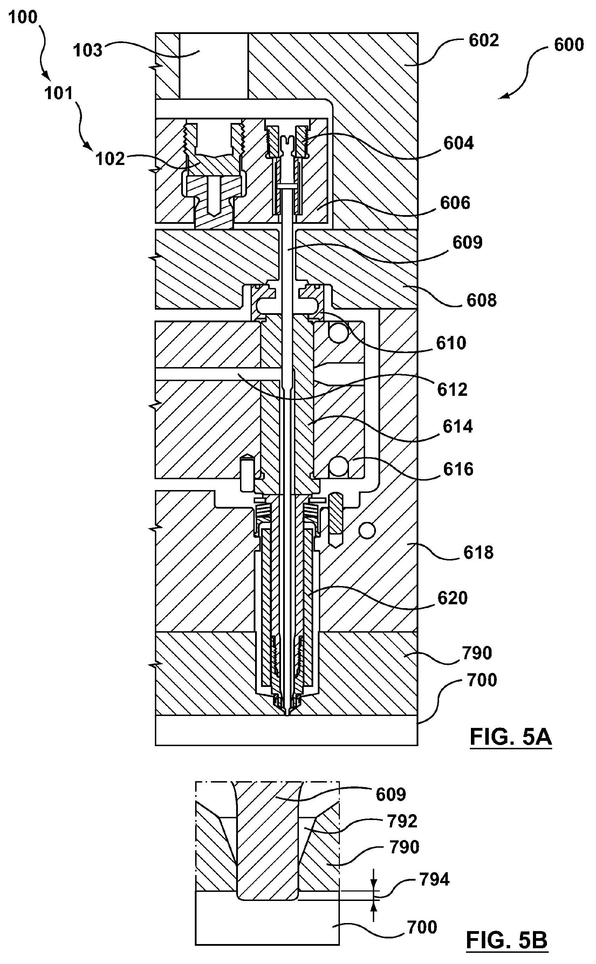

FIG. **4**A depicts a more detailed view of the mold-tool system (**100**). FIG. **4**B shows a first example of a first stem protrusion height that may be realized. FIG. **5**A depicts a more detailed view of the mold-tool system (**100**) having another position-adjustment assembly that may have a different height than that depicted in FIG. **4**A. FIG. **5**B depicts a second example of a second stem protrusion height that may be realized, which is a different stem protrusion height that may be realized with the arrangement depicted in FIG. **4**A.

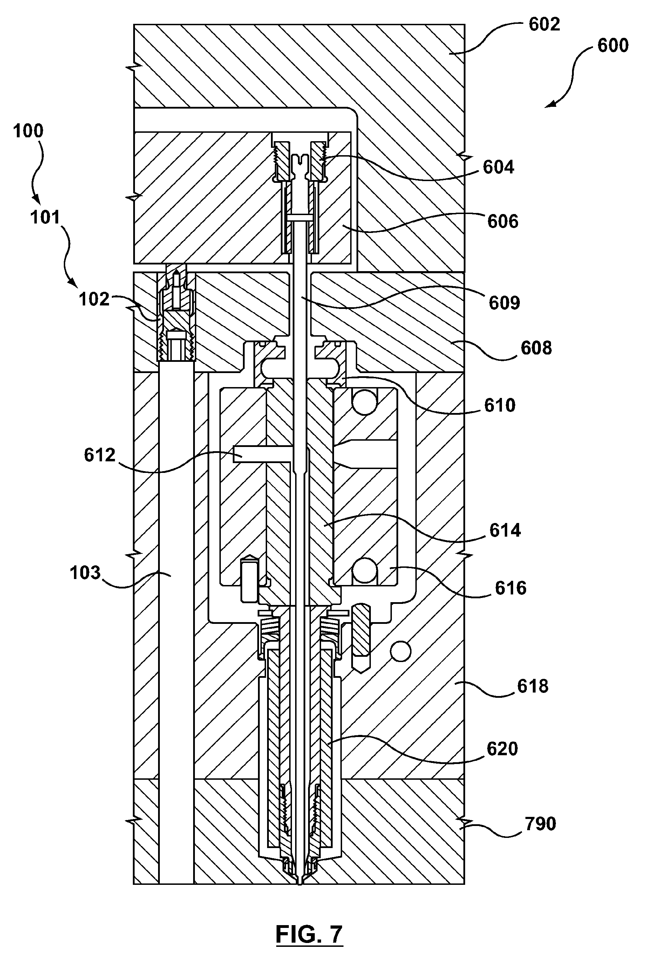

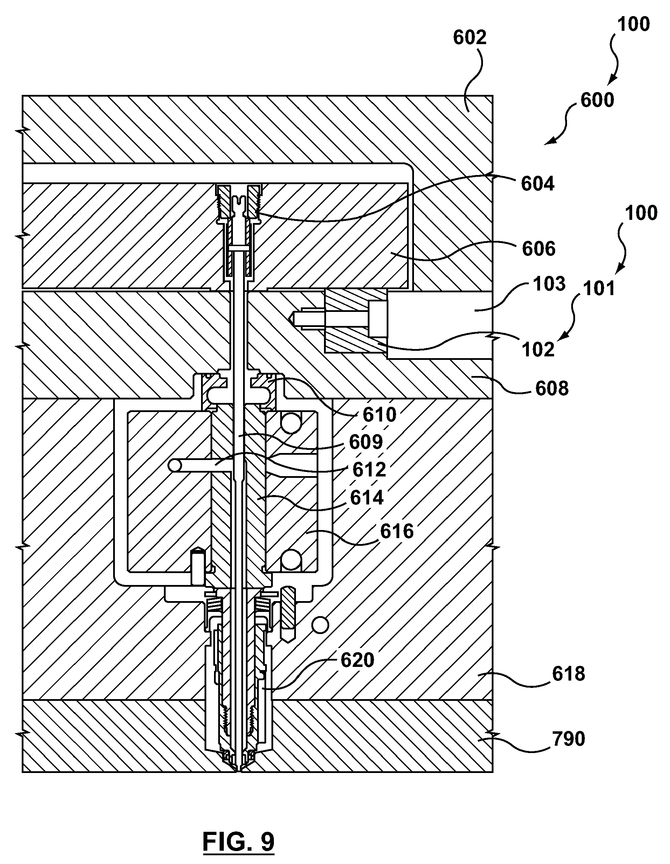

FIG. **4**A depicts the first example of the arrangement or manner in which the runner assembly (**600**) may provide the access portal (**103**). According to the example of FIG. **4**, "in situ" may include (and is not limited to) a backing plate that defines the access portal (**103**) that may be configured to permit access to the position-adjustment assembly (**102**) by using a removal assembly (**105**) without having to disassemble the stem-actuation plate (**606**) and the stem assembly (**609**). FIG. **7** provides the second example of the arrangement in which the runner assembly (**600**) may be arranged to provide the access portal (**103**). FIG. **9** provides the third example of the arrangement in which the runner assembly (**600**) may be arranged to provide the access portal (**103**).

The stem-actuation plate (**606**) is configured to move the stem assembly (**609**) between a melt-flow position and a melt-no flow position at a gate assembly (**720**) leading to the mold assembly (**700**). The position-adjustment assembly (**102**) may be configured to adjust amount of protrusion of the stem assembly (**609**) relative to the mold assembly (**700**) for the case where the stem assembly (**609**) is positioned in the melt-no flow position. It may be appreciated that an actuator (not depicted) may be connected with the stem-actuation plate (**606**) and the actuator may be configured to actuate movement of the stem-actuation plate (**606**) responsive to the actuator receiving an actuation signal.

The position-adjustment assembly (**102**) is accessible and replaceable from a back side of a backing plate (**602**) of the runner assembly (**600**). This may reduce time to make stem protrusion adjustments since the position-adjustment assembly (**102**) may be replaced while the runner assembly (**600**) remains within the molding envelope (**533**) defined by the stationary platen (**504**) and the movable platen (**506**), that is, within the in the press, in situ without removing plates of the runner assembly (**600**).

It will be appreciated that mechanisms (not depicted and not described but known) are used to keep and maintain movement of the stem-actuation plate (**606**) in its proper manner.

By way of example, the runner assembly (**600**) may include (and is not limited to) the following components and sub assemblies. A backing plate (**602**) may be configured to be mounted to and connected to stationary platen (**504**). The backing plate (**602**) may define the access portal (**103**) that may be configured to provide access to the position-adjustment assembly (**102**) and to a removal assembly (**105**). The removal assembly (**105**) may be used to or may be configured to remove the position-adjustment assembly (**102**). A stemconnector assembly (**604**) is configured to connect a stem-actuation plate (**606**) to a stem assembly (**609**). The position-adjustment assembly (**102**) may include thread structure that may be configured to threadably engage the stem-actuation plate (**606**). The stem assembly (**609**) extends through a manifold assembly (**616**) and through a nozzle assembly (**620**). The nozzle assembly (**620**) may be attached to one side of the manifold assembly (**616**). A manifold back plate assembly (**608**) abuts the backing plate (**602**). The stem-actuation plate (**606**) may be actuatably movable between the backing plate (**602**) and the manifold back plate assembly (**608**). A back-up pad (**610**) is placed between the manifold back plate assembly (**608**) and the manifold assembly (**616**). The manifold assembly (**616**) defines a melt channel (**612**) that may be configured to distribute the melt to the mold assembly (**700**) via the nozzle assembly (**620**). The manifold assembly (**616**) may also include a manifold-drop assembly (**614**) that may be configured to define part of the melt channel (**612**). The stem assembly (**609**) may extend through the manifold-drop assembly (**614**). A manifold front plate assembly (**618**) abuts and connects with the manifold back plate assembly (**608**). The manifold assembly (**616**) may be positioned and supported between the manifold front plate assembly (**618**) and the manifold back plate assembly (**608**). The nozzle assembly (**620**) may be configured to be in selective fluid communication with the mold assembly (**700**). The stem assembly (**609**) may be configured to be positioned between a melt-flow position, which permits the flow of the melt into the mold assembly (**700**), and a melt no-flow position in which no melt leaves the nozzle assembly (**620**). A gate assembly (**720**) may be positioned between the manifold front plate assembly (**618**) and the mold assembly (**700**).

FIG. **4**B depicts a cross-sectional view of the gate assembly (**790**) of FIG. **4**A, in which between the gate assembly (**790**) and the stem assembly (**609**) there is defined a gatenozzle melt channel (**792**). The stem assembly (**609**) is depicted, in FIG. **4**A, to be in the closed position or no-flow position. The stem assembly (**609**) is depicted as extending into the mold assembly (**700**) by an amount of stem protrusion (**794**). The amount of stem protrusion (**794**) is the amount of height of the position-adjustment assembly (**102**) that exists between the stem-actuation plate (**606**) and the manifold back plate assembly (**608**).

FIG. **5**A depicts a cross-sectional view of the runner assembly (**600**), for the case where the position-adjustment assembly (**102**) is configured to displace the stem-actuation plate (**606**) further away from the manifold back plate assembly (**608**) such that there may be less protrusion of the stem assembly (**609**) into the mold assembly (**700**), as depicted in FIG. 5B. It will be appreciated that the mechanisms that are used for alignment of the stem-actuation plate (**606**) are known and not depicted or described. There are many ways to actuate movement of stem-actuation plate (**606**) (such as, pneumatic, electric, etc)

FIG. **6** depicts a schematic representation of the runner assembly (**600**) for the second example of "in situ", in which (i) the runner assembly (**600**) remains positioned in an molding envelope (**533**) defined by stationary platen (**504**) and the movable platen (**506**), (ii) the runner assembly (**600**) open at the parting line), (iii) part of the mold assembly (**700**) is retracted or set apart from the runner assembly (**600**) and the stationary platen (**504**), and (iv) the mold assembly (**700**) remains supported by the movable platen (**506**).

FIG. 7 depicts a detailed cross-sectional view of the runner assembly (**600**) of FIG. **6**. Fig. **7** provides a more detailed view of the second example of the relationship of the access portal (**103**) as provided by the runner assembly (**600**). The manifold back plate assembly (**608**) and the manifold front plate assembly (**618**) and the gate assembly (**790**) all define the access portal (**103**). For the case where the mold assembly (**700**) is disconnected form the runner assembly (**600**), the access portal (**103**) may be used, by the removal assembly (**105**) to remove and replace the position-adjustment assembly (**102**) from the runner assembly (**600**).

FIG. 8 depicts a schematic representation of the runner assembly (**600**) for the third example of "in situ", in which: (i) the runner assembly (**600**) remains positioned in an molding envelope (**533**) defined by stationary platen (**504**) and the movable platen (**506**), (ii) the runner assembly (**600**) remains connected with the mold assembly (**700**), (iii) the runner assembly (**600**) remains connected with the stationary platen (**504**), and (iv) the mold assembly (**700**) remains supported by the movable platen (**506**).

FIG. **9** depicts a detailed cross-sectional view of the runner assembly (**600**) of FIG. **8**. Fig. **9** provides a more detailed view of the third example of the relationship of the access portal (**103**) as provided by the runner assembly (**600**). The manifold back plate assembly (**608**) defines the access portal (**103**) that may be oriented from a side of the runner assembly (**600**) that is not oriented toward stationary platen (**504**) and the movable platen (**506**)., the access portal (**103**) may be used, by the removal assembly (**105**) to remove the position-adjustment assembly (**102**) from the runner assembly (**600**).

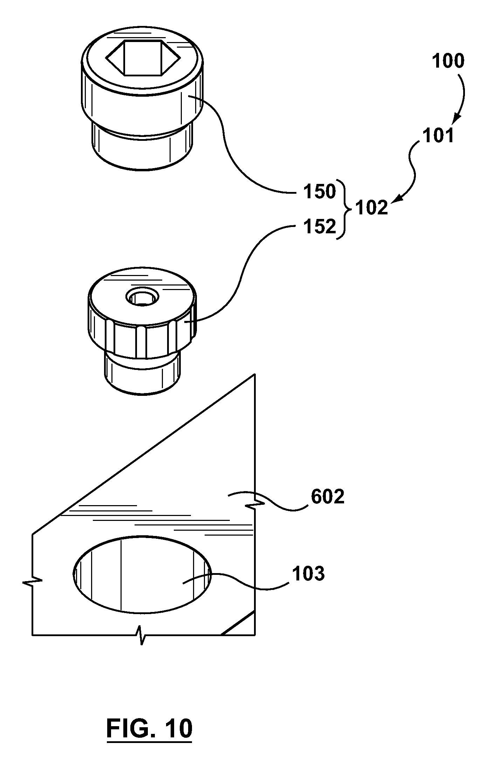

FIG. **10** depicts a perspective, exploded view (non-assembled state) of a first example of the position-adjustment assembly (**102**). The position-adjustment assembly (**102**) may include (and is not limited to): a retainer assembly (**150**), and a spacer element (**152**). The removal assembly (**105**) may be configured to be threadably couplable to the stem-actuation plate (**606**). The retainer assembly (**150**) may be configured to retain the spacer element (**152**) in position relative to the stem-actuation plate (**606**). The spacer element (**152**) may have a predetermined height. The spacer element (**152**) may be replacable with another spacer element that may have a different height than the spacer element (**152**), so that the amount of the protrusion of the stem assembly (**609**) may be locked. The position-adjustment assembly (**102**) may be secured by a set screw, or may be threaded, or may include a bolted retainer, a snap ring, etc. The position-adjustment assembly (**102**) may have a feature that may be configured to allow removal (i.e. a tap, a groove, a hole, etc) of the position-adjustment assembly (**102**).

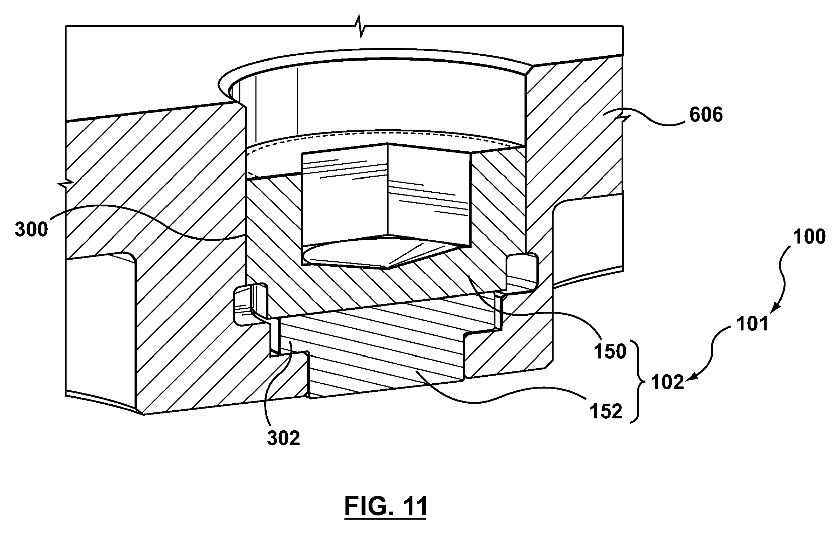

FIG. **11** depicts a perspective cross sectional view of the position-adjustment assembly (**102**) in an assembled state. The spacer element (**152**) may include a shoulder portion (**302**) that may be abutted against the stem-actuation plate (**606**). It will be appreciated that the backing plate is not depicted in FIG. **11****.** Threads (**300**) may be used to connect the retainer assembly (**150**) with the stem-actuation plate (**606**).

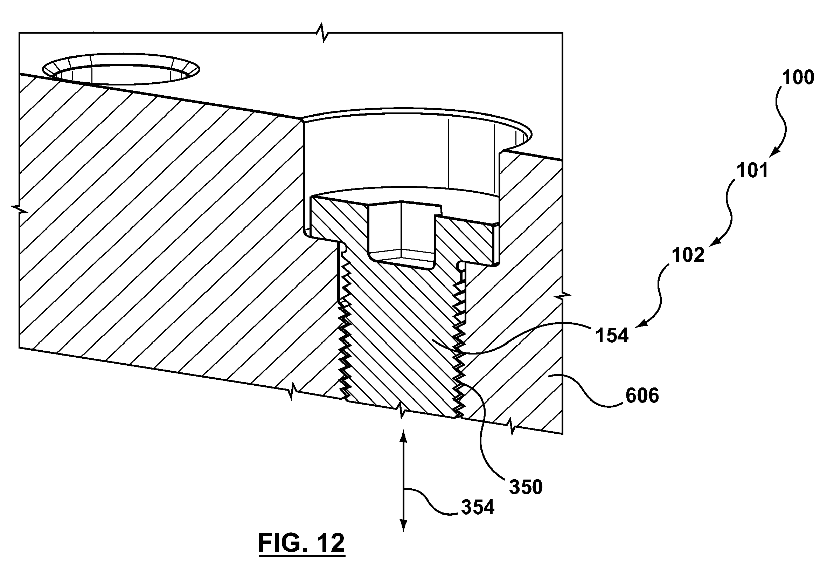

FIG. **12** depicts a second example of the position-adjustment assembly (**102**), in an assembled (installed) state. Threads (**350**) may be used to connect the retainer assembly (**150**) with stem-actuation plate (**606**). The threads (**350**) may provide for continuous height adjustment (**354**). T the position-adjustment assembly (**102**) may include (and is not limited to): a single unitary body (**154**) configured to: (i) be threadably couplable to the stem-actuation plate (**606**), (ii) have a predetermined height, (iii) be replacable with another single unitary body having a different height than the single unitary body (**154**), so that the amount of the protrusion of the stem assembly (**609**) may be locked.

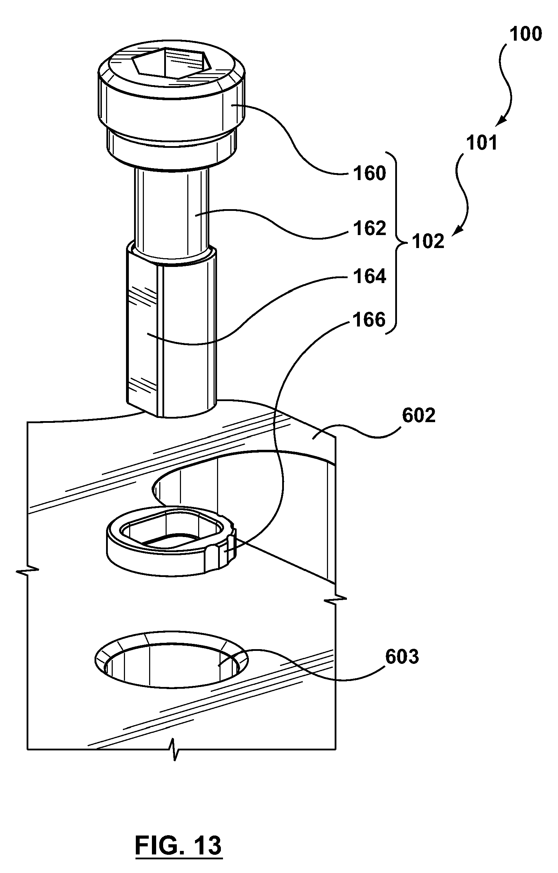

FIG. **13** depicts a third example of the position-adjustment assembly (**102**), in an exploded perspective view (uninstalled state). The position-adjustment assembly (**102**) may include (and is not limited to): a spacer member (**166**), a pin member (**160**) that may have a tool interface (**168**) configured to receive an application of torque from a removal assembly (**105**). A flat portion (**164**) may be positioned at an end of the pin member (**160**). An undercut portion (**162**) may be set apart from a top of the pin member (**160**). The undercut portion (**162**) may be configured to engage the spacer member (**166**) so as to facilitate removal of the spacer member (**166**) from the stem-actuation plate (**606**).

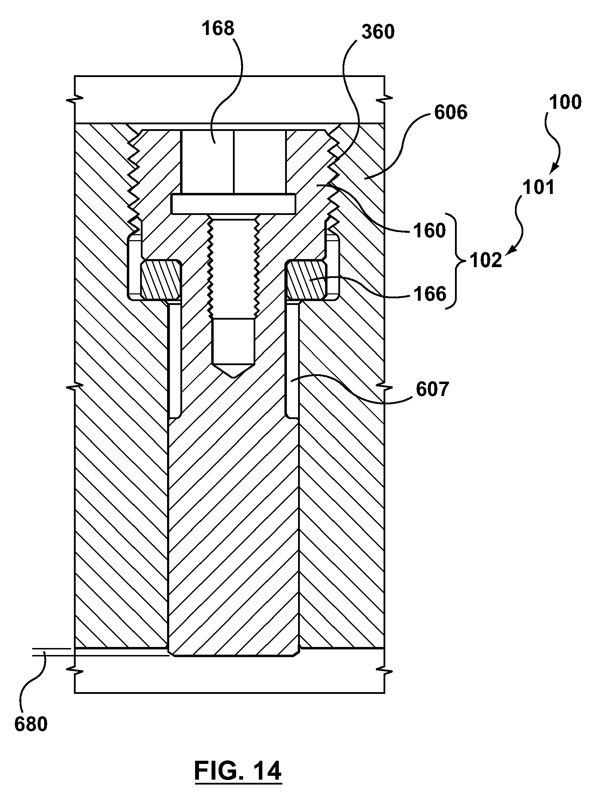

FIG. **14** depicts the third example of the position-adjustment assembly (**102**) of FIG. **13**, in a section view (installed state). Threads (**360**) are configured to retain the position-adjustment assembly (**102**) and spacer member (**166**). The stem-actuation plate (**606**) may define defines a channel (**607**) that may receive the position-adjustment assembly (**102**), at least in part. Different spacer heights may change amount of stem protrusion (**680**).

It will be appreciated that the assemblies and modules described above may be connected with each other as may be required to perform desired functions and tasks that are within the scope of persons of skill in the art to make such combinations and permutations without having to describe each and every one of them in explicit terms. There is no particular assembly, components, or software code that is superior to any of the equivalents available to the art. There is no particular mode of practicing the inventions and/or examples of the invention that is superior to others, so long as the functions may be performed. It is believed that all the crucial aspects of the invention have been provided in this document.

It is understood that the scope of the present invention is limited to the scope provided by the independent claim(s), and it is also understood that the scope of the present invention is not limited to: (i) the dependent claims, (ii) the detailed description of the non-limiting embodiments, (iii) the summary, (iv) the abstract, and/or (v) description provided outside of this document (that is, outside of the instant application as filed, as prosecuted, and/or as granted). It is understood, for the purposes of this document, the phrase "includes (and is not limited to)" is equivalent to the word "comprising". It is noted that the foregoing has outlined the non-limiting embodiments (examples). The description is made for particular non-limiting embodiments (examples). It is understood that the non-limiting embodiments are merely illustrative as examples.

## Claims

1. A mold-tool system (100), comprising:
an assembly (101) and a runner assembly (600) supporting the assembly (101),
the runner assembly (600) being configured to provide an access portal (103) configured to permit access to the assembly (101) by a removal assembly (105), so that the assembly (101) may be removed from the runner assembly (600) and replaced,
the assembly (101) including a position-adjustment assembly (102) being configured to displace a stem-actuation plate (606) connected with a stem assembly (609) of a nozzle assembly (620), thereby adjusting an amount of stem protrusion (794) of the stem assembly (609) relative to a mold assembly (700); and
the runner assembly (600) supporting actuatable movement of the stem-actuation plate (606), and
the access portal (103) being configured to permit access to the position-adjustment assembly (102),
the access portal (103) further being configured to permit access to the assembly (101) in situ, for a case where the runner assembly (600) is operatively mounted to a molding system (500), **characterized in that**
in situ includes a backing plate (602) defining the access portal (103), and the access portal (103) is configured to permit access to the position-adjustment assembly (102) by using the removal assembly (105) without having to disassemble the stem-actuation plate (606) and the stem assembly (609), and the position-adjustment assembly (102) is accessible and replaceable from a back side of the backing plate (602) of the runner assembly (600).

2. The mold-tool system (100) of claim 1, wherein the access portal (103) is configured to permit accessible adjustment to the position-adjustment assembly (102).

3. The mold-tool system (100) of claim 1, wherein the access portal (103) is configured to accommodate insertion of the removal assembly (105) so as to permit replacement, at least in part, of the position-adjustment assembly (102), so that a different stem-protrusion height may be realized with another position-adjustment assembly (102).

4. The mold-tool system (100) of claim 1, wherein the stem-actuation plate (606) is configured to move the stem assembly (609) between a melt-flow position and a melt-no flow position at a gate assembly (720) leading to the mold assembly (700).

5. The mold-tool system (100) of claim 1, wherein the position-adjustment assembly (102) is configured to adjust amount of protrusion of the stem assembly (609) relative to the mold assembly (700) for a case where the stem assembly (609) is positioned in a melt-no flow position.

## Patentansprüche

1. Formwerkzeugsystem (100), umfassend:
eine Anordnung (101) und eine Angussverteileranordnung (600),
wobei die Angussverteileranordnung (600) so ausgelegt ist, dass sie ein Zugangsportal (100) bereitstellt, das so ausgelegt ist, dass es Zugang zur Anordnung (101) durch eine Entfernungsanordnung (105) ermöglicht, so dass die Anordnung (101) aus der Angussverteileranordnung (600) entfernt und ausgewechselt werden kann,
die Anordnung (101) eine Positionsanpassungsanordnung (102) umfasst, die so ausgelegt ist, dass sie eine Stegbetätigungsplatte (606), die mit einer Steganordnung (609) einer Düsenanordnung (620) verbunden ist, verschiebt, um dadurch ein Ausmaß von Stegüberstand (794) der Steganordnung (609) in Bezug auf eine Formanordnung (700) anzupassen; und
die Angussverteileranordnung (600) betätigende Bewegung der Stegbetätigungsplatte (606) unterstützt, und
das Zugangsportal (103) so ausgelegt ist, dass es Zugang zur Positionsanpassungsanordnung (102) ermöglicht,
das Zugangsportal (103) ferner so ausgelegt ist, dass es Zugang zur Anordnung (101) vor Ort für einen Fall ermöglicht, in welchem die Angussverteileranordnung (600) funktionell an einem Formsystem (500) montiert ist, **dadurch gekennzeichnet, dass**
vor Ort eine Aufspannplatte (602) umfasst, die das Zugangsportal (13) definiert, und das Zugangsportal (103) so ausgelegt ist, dass es Zugang zur Positionsanpassungsanordnung (102) durch Verwenden der Entfernungsanordnung (105) ermöglicht, ohne die Stegbetätigungsplatte (606) und die Steganordnung (609) demontieren zu müssen, und die Positionsanpassungsanordnung (102) von einer Rückseite (602) der Aufspannplatte (602) der Angussverteileranordnung (600) zugänglich und auswechselbar ist.

2. Formwerkzeugsystem (100) nach Anspruch 1, wobei das Zugangsportal (103) so ausgelegt ist, dass es Anpassungszugang zur Positionsanpassungsanordnung (102) ermöglicht.

3. Formwerkzeugsystem (100) nach Anspruch 1, wobei das Zugangsportal (103) so ausgelegt ist, dass es einer Einführung der Entfernungsanordnung (105) Rechnung trägt, um wenigstens teilweises Auswechseln der Positionsanpassungsanordnung (102) zu ermöglichen, damit eine andere Stegüberstandhöhe mit einer anderen Positionsanpassungsanordnung (12) realisiert werden kann.

4. Formwerkzeugsystem 8100) nach Anspruch 1, wobei die Stegbetätigungsplatte (606) so ausgelegt ist, dass sie die Steganordnung zwischen einer Schmelzflussposition und einer Position, in welcher Schmelze nicht fließt, an einer Anschnittanordnung (720) bewegt, die zur Formanordnung (700) führt.

5. Formwerkzeug (100) nach Anspruch 1, wobei die Positionsanpassungsanordnung (102) so ausgelegt ist, dass sie ein Ausmaß von Überstand der Steganordnung (69) in Bezug auf die Formanordnung (700) für einen Fall anpasst, in welchem die Steganordnung (609) in einer Position positioniert wird, in welcher Schmelze nicht fließt.

## Revendications

1. Système moule-outil (100), comprenant :
un ensemble (101) et un ensemble de canal (600) supportant l'ensemble (101),
l'ensemble de canal (600) étant configuré pour fournir une porte d'accès (103) configurée pour permettre l'accès à l'ensemble (101) par un ensemble de retrait (105), de sorte que l'ensemble (101) puisse être retiré de l'ensemble de canal (600) et remplacé,
l'ensemble (101) comportant un ensemble de réglage de position (102) qui est configuré pour déplacer une plaque d'actionnement de tige (606) reliée à un ensemble de tige (609) d'un ensemble de buse (620), réglant ainsi un degré de saillie de tige (794) de l'ensemble de tige (609) par rapport à un ensemble de moule (700) ; et
l'ensemble de canal (600) supportant le mouvement actionnable de la plaque d'actionnement de tige (606), et
la porte d'accès (103) étant configurée pour permettre l'accès à l'ensemble de réglage de position (102),
la porte d'accès (103) étant en outre configurée pour permettre l'accès à l'ensemble (101) in situ, dans le cas où l'ensemble de canal (600) est monté de manière fonctionnelle sur un système de moulage (500),
**caractérisé en ce qu'**il comporte in situ une plaque d'appui (602) définissant la porte d'accès (103), et la porte d'accès (103) est configurée pour permettre l'accès à l'ensemble de réglage de position (102) en utilisant l'ensemble de retrait (105) sans avoir à démonter la plaque d'actionnement de tige (606) et l'ensemble de tige (609), et l'ensemble de réglage de position (102) est accessible et remplaçable à partir d'un côté arrière de la plaque d'appui (602) de l'ensemble de canal (600).

2. Système moule-outil (100) de la revendication 1, dans lequel la porte d'accès (103) est configurée pour permettre un réglage accessible à l'ensemble de réglage de position (102).

3. Système moule-outil (100) de la revendication 1, dans lequel la porte d'accès (103) est configurée pour permettre l'insertion de l'ensemble de retrait (105) de manière à permettre le remplacement, au moins en partie, de l'ensemble de réglage de position (102), de sorte qu'une hauteur de saillie de tige différente puisse être réalisée avec un autre ensemble de réglage de position (102).

4. Système moule-outil (100) de la revendication 1, dans lequel la plaque d'actionnement de tige (606) est configurée pour déplacer l'ensemble de tige (609) entre une position d'écoulement de matière fondue et une position de non écoulement de matière fondue au niveau d'un ensemble d'entrée (720) conduisant à l'ensemble de moule (700).

5. Système moule-outil (100) de la revendication 1, dans lequel l'ensemble de réglage de position (102) est configuré pour régler un degré de la saillie de l'ensemble de tige (609) par rapport à l'ensemble de moule (700) dans le cas où l'ensemble de tige (609) est positionné dans une position de non écoulement de matière fondue.
